# EUROPEAN PATENT APPLICATION

(11) **EP 4 257 650 A1**
(43) Date of publication of application: **11.10.2023**
(21) Application number: 21900432.2
(22) Date of filing: 19.11.2021
(51) Int. Cl.: C09J 11/08, C09J 105/00, C09J 7/38

(54) **ADHESIVE COMPOSITION AND ADHESIVE TAPE**

(30) Priority: 01.12.2020 JP 2020199265
(71) Applicant: Nitto Denko Corporation, Ibaraki-shi Osaka 567-8680 (JP)
(72) Inventor: KUMADA, Tatsuya, Ibaraki-shi, Osaka 567-8680 (JP); OGINO, Yoshiko, Ibaraki-shi, Osaka 567-8680 (JP); HARA, Yusuke, Ibaraki-shi, Osaka 567-8680 (JP); NAITO, Tomonari, Ibaraki-shi, Osaka 567-8680 (JP)
(74) Representative: Müller-Boré & Partner Patentanwälte PartG mbB
(86) International application number: PCT/JP2021/042592
(87) International publication number: WO 2022/118677

(57) **Abstract**

An adhesive composition contains a β-1,3-glucan derivative obtained by introducing an acyl group into β-1,3-glucan; and a rosin-based resin. An adhesive tape (1) includes an adhesive layer (3) formed from the adhesive composition.

## Description

### TECHNICAL FIELD

The present invention relates to an adhesive composition and an adhesive tape.

### BACKGROUND ART

There has been known an adhesive composition containing a β-1,3-glucan derivative obtained by introducing an acyl group into β-1,3-glucan (ref: for example, Patent Document 1 below). Since the β-1,3-glucan derivative is a polysaccharide of biological origin, the adhesive agent described in Patent Document 1 has a small environmental load as compared to conventional adhesive agents using petroleum as a raw material.

### Citation List

### Patent Document

Patent Document 1: Japanese Unexamined Patent Publication No. 2018-154723

### SUMMARY OF THE INVENTION

### PROBLEM TO BE SOLVED BY THE INVENTION

Adhesive compositions are required to have higher adhesive strength.

There is sometimes a case where an adhesive composition is dissolved in a solvent to prepare a solution, and the solution is applied to form an adhesive layer. When the solution has a low viscosity, a thin adhesive layer can be formed, because the low viscosity solution allows easy handling, such as stirring and feeding during production and has good coatability. In addition, such solution has an advantage of providing an adhesive layer having excellent external appearance.

Further, when the viscosity of the solution is kept low, the solids concentration of the solution can be set higher, and it is advantageous in terms of productivity such as improvement of yields and shortening of drying time.

The present invention provides an adhesive composition having high adhesive strength and capable of reducing the viscosity of the solution, and an adhesive tape having excellent external appearance.

### MEANS FOR SOLVING THE PROBLEM

The present invention (1) includes an adhesive composition, containing a β-1,3-glucan derivative obtained by introducing an acyl group into β-1,3-glucan; and a rosin-based resin.

The present invention (2) includes the adhesive composition described in (1), in which the rosin-based resin has a softening point of 140°C or less.

The present invention (3) includes the adhesive composition described in (1) or (2), in which the acyl group is represented by RCO-, where R is an aliphatic hydrocarbon group having 5 or more and 16 or less carbon atoms.

The present invention (4) includes the adhesive composition described in any one of (1) to (3), in which an amount of the rosin-based resin relative to 100 parts by weight of the β-1,3-glucan derivative is 10 parts by weight or more and 100 parts by weight or less.

The present invention (5) includes an adhesive tape including an adhesive layer formed from the adhesive composition described in any one of (1) to (4).

### EFFECTS OF THE INVENTION

The adhesive composition of the present invention has high adhesive strength and can reduce viscosity of a solution.

The adhesive tape of the present invention can include a thin adhesive layer and is excellent in external appearance.

Further, when the viscosity of the solution is kept low, the solids concentration of the solution can be set higher, and it is advantageous in terms of productivity such as improvement of yields and shortening of drying time.

### BRIEF DESCRIPTION OF THE DRAWINGS

FIG. 1 is a cross-sectional view of one embodiment of an adhesive tape according to the present invention.
FIG. 2 is a cross-sectional view of another embodiment of the adhesive tape.
FIG. 3 is a cross-sectional view of another embodiment of the adhesive tape.

### DESCRIPTION OF THE EMBODIMENTS

### [Adhesive composition]

The adhesive composition of the present invention contains a β-1,3-glucan derivative and a rosin-based resin.

### [β-1,3-glucan derivative]

The β-1,3-glucan derivative is a base polymer in the adhesive composition. The β-1,3-glucan derivative is a partially acylated compound in which a part of a hydroxyl group in glucose in β-1,3-glucan is acylated with an acyl group. That is, the β-1,3-glucan derivative is an acyl compound in which an acyl group is incorporated into β-1,3-glucan (obtained by introducing an acyl group into β-1,3-glucan).

The acyl group is represented by RCO-. Examples of R include a hydrocarbon group. Examples of the hydrocarbon group include an aliphatic hydrocarbon group, an alicyclic hydrocarbon group, and an aromatic hydrocarbon group, and preferably, an aliphatic hydrocarbon group is used. Examples of the aliphatic hydrocarbon group include a saturated aliphatic hydrocarbon group and an unsaturated aliphatic hydrocarbon group, and preferably, a saturated aliphatic hydrocarbon group, that is, an alkyl group is used. Examples of the alkyl group include a linear alkyl group and a branched alkyl group, and preferably, a linear alkyl group is used. The alkyl group has, for example, 3 or more carbon atoms, and for example, 18 or less carbon atoms. Examples of the linear alkyl group include propyl, butyl, pentyl, hexyl, heptyl, octyl, nonyl, decyl, undecyl, dodecyl, tridecyl, tetradecyl, pentadecyl, hexadecyl, heptadecyl, and octadecyl. As the unsaturated aliphatic hydrocarbon group, alkenyl groups having, for example, 3 or more carbon atoms, preferably, 5 or more carbon atoms, and for example, 18 or less carbon atoms are used. Examples of the alkenyl group include heptadecenyl.

The aliphatic hydrocarbon group (alkyl group or alkenyl group) has preferably 5 or more carbon atoms, more preferably 7 or more carbon atoms, and preferably 17 or less carbon atoms, more preferably 15 or less carbon atoms, even more preferably 10 or less carbon atoms. When the number of carbon atoms of the aliphatic hydrocarbon group exceeds the lower limit and is less than the upper limit, the adhesive strength can be sufficiently improved, and the viscosity of a solution (to be described later) can be reduced.

Specific examples of the acyl group include butanoyl (an example of RCO where R is C₃H₇), pentanoyl (an example of RCO where R is C₄H₉), hexanoyl (an example of RCO where R is C₅H₁₁), heptanoyl (an example of RCO where R is C₆H₁₃), octanoyl (an example of RCO where R is C₇H₁₅), nonanoyl (an example of RCO where R is C₈H₁₇), decanoyl (an example of RCO where R is C₉H₁₉), lauroyl (i.e., dodecanoyl) (an example of RCO where R is C₁₁H₂₃), myristoyl (i.e., tetradecanoyl) (an example of RCO where R is C₁₃H₂₇), palmitoyl (i.e., hexadecanoyl) (an example of RCO where R is C₁₅H₃₁), stearoyl (i.e., octadecanoyl) (an example of RCO where R is C₁₇H₃₅), oleoyl (an example of RCO where R is C₁₇H₃₃), and nonadecanoyl (an example of RCO where R is C₁₈H₃₇). Preferably, octanoyl, nonanoyl, decanoyl, lauroyl, myristoyl, and palmitoyl are used.

Types, physical properties, and production methods of the β-1,3-glucan derivative are described in, for example, Japanese Unexamined Patent Publication No. 2018-154723.

The proportion of the β-1,3-glucan derivative in the solid content of the adhesive composition is, for example, 50% by weight or more, preferably 60% by weight or more, more preferably 70% by weight or more, and for example, 99% by weight or less, preferably 90% by weight or less, more preferably 80% by weight or less.

The β-1,3-glucan derivative is identified by ¹H-NMR spectrum and FT-IR spectrum. Details of the identification is described in Japanese Unexamined Patent Publication No. 2018-154723.

### [Rosin-based resin]

The rosin-based resin functions as a tackifier to enhance adhesive strength of the adhesive composition. The adhesive composition of the present invention contains the rosin-based resin as a tackifier. The rosin-based resin can improve the adhesive strength of the adhesive composition and can keep the viscosity of the solution low.

Example of the rosin-based resin include disproportionated rosin, rosin ester, phenolic modified rosin, hydrogenated rosin, polymerized rosin, maleated rosin, fumarated rosin, and disproportionated maleic acid modified rosin resin. These can be used alone or in combination.

As the rosin-based resin, preferably, rosin ester and phenolic modified rosin are used. The rosin ester includes pentaerythritol ester-modified rosin resin.

The phenolic modified rosin may be referred to as a terpene-phenol resin.

The rosin-based resin has a ring and ball softening point of, for example, 160°C or less, preferably less than 145°C, more preferably 140°C or less, even more preferably 135°C or less, and for example, 80°C or more, preferably 100°C or more. When the softening point of the rosin-based resin is less than the above-described upper limit, the viscosity of the solution of the adhesive composition can be kept low.

The amount of the rosin-based resin relative to 100 parts by weight of the β-1,3-glucan derivative is, for example, 5 parts by weight or more, preferably 10 parts by weight or more, more preferably 20 parts by weight or more, and for example, 150 parts by weight or less, preferably 100 parts by weight or less, more preferably 90 parts by weight or less, even more preferably 80 parts by weight or less, particularly preferably 60 parts by weight or less, most preferably 40 parts by weight or less. When the amount of the rosin-based resin relative to 100 parts by weight of the β-1,3-glucan derivative exceeds the above-described lower limit, the viscosity of the solution of the adhesive composition can be kept low, and thus a thin adhesive layer (to be described later) can be formed. Further, when the viscosity of the solution is kept low, the solids concentration can be set higher, and it is advantageous in terms of productivity such as improvement of yields and shortening of drying time. On the other hand, when the amount of the rosin-based resin relative to 100 parts by weight of the β-1,3-glucan derivative is less than the above-described upper limit, the adhesive strength can be further enhanced.

As the rosin-based resin, commercially available products are used.

The rosin-based resin in the adhesive composition is identified by ¹H-NMR spectrum, FT-IR spectrum, gel permeation chromatography, and/or mass spectrometry.

### [Additive]

The adhesive composition may contain an additive at an appropriate ratio. Examples of the additive include other base polymers (acrylic resin), other tackifiers (terpene-based resin and petroleum-based resin), viscosity modifiers, leveling agents, plasticizers, fillers, stabilizers, preservative agents, and antioxidants.

To produce the adhesive composition, the β-1,3-glucan derivative, the rosin-based resin, and as necessary, an additive are blended and mixed. Alternatively, the above-described components can also be dissolved in an organic solvent to prepare a solution containing the adhesive composition. The solution may be referred to as a "solution of the adhesive composition". The organic solvent includes a low polar solvent and a high polar solvent.

Examples of the low polar solvent include an aromatic compound, an alicyclic compound, and a chain saturated hydrocarbon compound. Examples of the aromatic compound include toluene. Examples of the alicyclic compound include cyclohexane and methylcyclohexane. Examples of the chain saturated hydrocarbon compound include pentane, hexane, and heptane.

Examples of the high polar solvent include ketone, ester, and alcohol. Examples of the ketone include methyl ethyl ketone. Examples of the ester include ethyl acetate. Examples of the alcohol include methanol and ethanol.

These organic solvents can be used alone or in combination. Preferably, a low polar solvent is used alone, and a low polar solvent and a high polar solvent are used in combination.

The solid content in the solution of the adhesive composition is, for example, 1% by weight or more, preferably 5% by weight or more, and for example, 50% by weight or less, preferably 40% by weight or less.

The β-1,3-glucan derivative and the rosin-based resin can also be mixed using a kneader or the like to prepare a hot-melt resin of the adhesive composition. The hot-melt resin of the adhesive composition may be simply referred to as a "hot-melt resin".

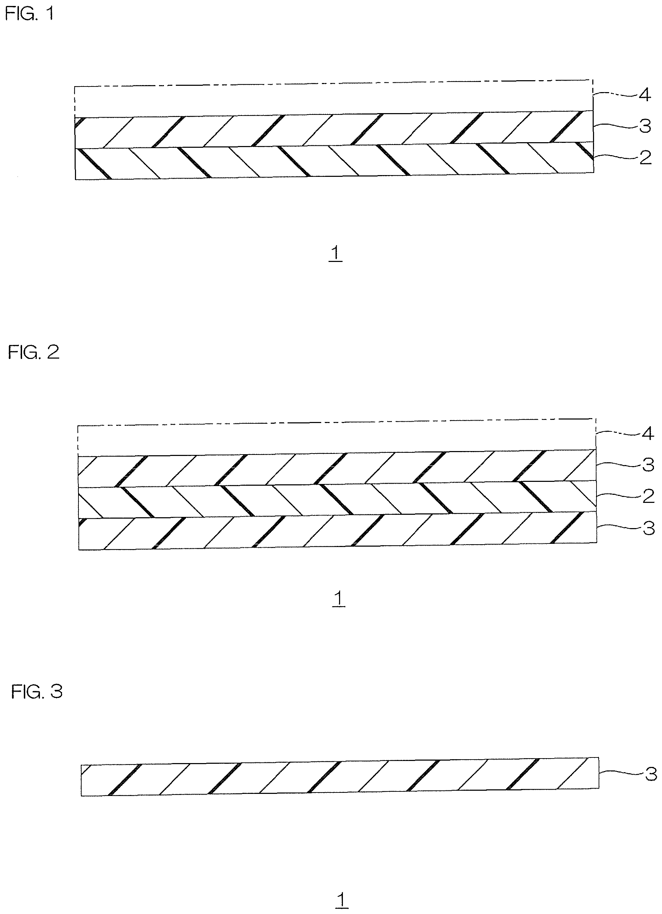

As shown in FIG. 1, a surface of a base material sheet 2 is coated with the solution of the adhesive composition, and thereafter dried by heating to form an adhesive layer 3. The adhesive layer 3 can also be formed by hot-melt coating the surface of the base material sheet 2 with the above-described hot-melt resin, and thereafter cooling the hot-melt resin. In this manner, an adhesive tape 1 having the base material sheet 2 and the adhesive layer 3 can be produced.

Examples of a material of the base material sheet 2 include resin. Examples of the resin include polyester. The base material sheet 2 has a thickness of 0.5 µm or more, and for example, 900 µm or less.

The adhesive layer 3 has a thickness of, for example, 1000 µm or less, preferably 500 µm or less, more preferably 200 µm or less, even more preferably 100 µm or less, particularly preferably 75 µm or less, most preferably 50 µm or less. The lower limit of the thickness of the adhesive layer 3 is not particularly limited. The lower limit of the thickness of the adhesive layer 3 is, for example, 1 µm. The adhesive tape 1 has a thickness of, for example, 1.5 µm or more, and for example, 1100 µm or less.

Further, as shown in FIG. 2, the adhesive tape 1 can also include the base material sheet 2, and the adhesive layers 3 disposed on front and back surfaces of the base material sheet 2.

Alternatively, as shown in FIG. 3, a base material-less type adhesive tape 1 including the adhesive layer 3 alone without using the base material sheet 2 can also be obtained. The adhesive tape 1 is formed from the adhesive layer 3 alone.

### [Adhesive strength]

The adhesive strength of the adhesive layer 3 to a stainless steel plate at 23°C and 50% RH is, for example, 1 N/20 mm or more, preferably 2 N/20 mm or more, more preferably 3 N/20 mm or more, and for example, 20 N/20 mm or less. A measurement method of the adhesive strength of the adhesive layer 3 to the stainless steel plate is described in detail in Example below.

The viscosity at 25°C of a toluene solution containing the β-1,3-glucan derivative and the rosin-based resin in a total proportion of 10% by weight is, for example, 15 Pa s or less, preferably 10 Pa s or less, more preferably 7 Pa s or less, even more preferably 5 Pa s or less, particularly preferably 2.0 Pa·s or less, more particularly preferably 1.5 Pa·s or less, most preferably 1.0 Pa·s or less. When the viscosity of the toluene solution is less than the above-described upper limit, the viscosity of the solution containing the β-1,3-glucan derivative and the rosin-based resin can be reliably reduced, the solution is excellent in handleability, a thin adhesive layer 3 can be formed, and the adhesive tape 1 is excellent in external appearance. Since the viscosity of the solution is kept low as long as the viscosity of the toluene solution is less than the above-described upper limit, the solids concentration can be set higher, and it is advantageous in terms of productivity such as improvement of yields and shortening of drying time. A measurement method of the viscosity of the toluene solution is described in Example below.

### [Effects of adhesive composition and adhesive tape]

The adhesive composition contains a rosin-based resin as an essential tackifier. Therefore, the adhesive composition and the adhesive tape have high adhesive strength, can reduce the viscosity of the solution, and can form a thin adhesive layer 3. For this reason, the adhesive tape 1 including the adhesive layer 3 is excellent in external appearance.

In contrast to this, when the adhesive composition contains a terpene-based resin or a petroleum-based resin as an essential tackifier, the adhesion is not sufficiently improved, the viscosity of the solution increases, and thus the adhesive layer 3 cannot be made thinner.

### [Modified examples of adhesive composition and adhesive tape]

In the modified example, the same reference numerals are provided for members and steps corresponding to each of those in one embodiment, and their detailed description is omitted. Further, the modified example can achieve the same function and effect as that of one embodiment unless otherwise specified. Furthermore, one embodiment and the modified examples thereof can be appropriately used in combination.

The adhesive composition is dispersed in water to prepare an aqueous dispersion, and the aqueous dispersion is applied to form an adhesive layer. That is, an aqueous dispersion can also be prepared in place of the solution of one embodiment.

As shown in phantom lines in FIGS. 1 and 2, the adhesive tape 1 of the modified example further includes a release sheet 4 disposed on the surface of the adhesive layer 3. Example

Specific numerical values such as blending ratios (content), physical property values, and parameters used in the following description can be replaced with the upper limit value (numeral values defined with "or less" or "less than") or the lower limit value (numeral values defined with "or more" or "more than") of the corresponding blending ratios (content), physical property values, and parameters described in the above-mentioned "DESCRIPTION OF THE EMBODIMENTS". The "parts" and "%" are based on weight unless otherwise specified in the following description.

### [Synthesis Examples of β-1,3-glucan derivative]

### Synthesis Example 1

### [Synthesis of myristoylated β-1,3-glucan (RCO where R (aliphatic hydrocarbon group) has 13 carbon atoms)]

To a reaction vessel equipped with a condenser tube, a nitrogen inlet tube, a thermometer, and a stirrer, 13.3 g of β-1,3-glucan (Euglena Co., Ltd.: 82.03 mmol of glucose part) and 1000 mL of dehydrated pyridine (FUJIFILM Wako Pure Chemical Corporation) were added, and the mixture was stirred for 0.5 hours at a temperature of 92°C under a nitrogen atmosphere. To the obtained pyridine solution, 133.05 mL of myristoyl chloride (492.2 mmol: FUJIFILM Wako Pure Chemical Corporation) was added, and the mixture was heated to 92°C and then stirred for 1 hour. In this manner, a reaction mixture was prepared.

Thereafter, a solid intermediate was obtained from the reaction mixture. First, 1 hour after the start of the reaction, 2000 mL of methanol was added to the reaction mixture and cooled to room temperature. Then, a solid thus formed was taken out and then dissolved in 600 mL of toluene to prepare a toluene solution. The toluene solution was poured into 2000 mL of methanol under stirring to give a solid. By repeating the process of dissolving the solid in toluene and pouring the toluene solution into methanol 3 times, washing was performed to give a solid. The solid was dried at 60°C for 4 hours under reduced pressure. In this manner, a myristoylated β-1,3-glucan was obtained. That is, the myristoylated β-1,3-glucan was a β-1,3-glucan derivative obtained by introducing myristoyl into β-1,3-glucan.

### Synthesis Example 2

### [Synthesis of palmitoylated β-1,3-glucan (RCO where R (aliphatic hydrocarbon group) has 15 carbon atoms)]

In the same manner as in Synthesis Example 1, a palmitoylated β-1,3-glucan was obtained. However, 133.05 mL (492.2 mmol) of myristoyl chloride was changed to 150.21 mL of palmitoyl chloride (492.2 mmol: FUJIFILM Wako Pure Chemical Corporation). That is, the palmitoylated β-1,3-glucan was a β-1,3-glucan derivative obtained by introducing palmitoyl into β-1,3-glucan.

### Synthesis Example 3

### [Synthesis of lauroylated β-1,3-glucan (RCO where R (aliphatic hydrocarbon group) has 11 carbon atoms)]

In the same manner as in Synthesis Example 1, a lauroylated β-1,3-glucan was obtained. However, 133.05 mL (492.2 mmol) of myristoyl chloride was changed to 113.81 mL of lauroyl chloride (492.2 mmol: FUJIFILM Wako Pure Chemical Corporation). That is, the lauroylated β-1,3-glucan was a β-1,3-glucan derivative obtained by introducing lauroyl into β-1,3-glucan.

### Synthesis Example 4

### [Synthesis of octanoylated β-1,3-glucan (RCO where R (aliphatic hydrocarbon group) has 7 carbon atoms)]

In the same manner as in Synthesis Example 1, an octanoylated β-1,3-glucan was obtained. However, 133.05 mL (492.2 mmol) of myristoyl chloride was changed to 84.18 mL of octanoyl chloride (492.2 mmol: FUJIFILM Wako Pure Chemical Corporation). That is, the octanoylated β-1,3-glucan was a β-1,3-glucan derivative obtained by introducing octanoyl into β-1,3-glucan.

### Synthesis Example 5

### [Synthesis of butanoylated β-1,3-glucan (RCO where R (aliphatic hydrocarbon group) has 3 carbon atoms)]

In the same manner as in Synthesis Example 1, a butanoylated β-1,3-glucan was obtained. However, 133.05 mL (492.2 mmol) of myristoyl chloride was changed to 50.98 mL of butanoyl chloride (492.2 mmol: FUJIFILM Wako Pure Chemical Corporation). That is, the butanoylated β-1,3-glucan was a β-1,3-glucan derivative obtained by introducing butanoyl into β-1,3-glucan.

### Synthesis Example 6

### [Synthesis of oleoylated β-1,3-glucan (RCO where R (aliphatic hydrocarbon group) has 17 carbon atoms)]

In the same manner as in Synthesis Example 1, an oleoylated β-1,3-glucan was obtained. However, 133.05 mL (492.2 mmol) of myristoyl chloride was changed to 162.38 mL of oleoyl chloride (492.2 mmol: FUJIFILM Wako Pure Chemical Corporation). That is, the oleoylated β-1,3-glucan was a β-1,3-glucan derivative obtained by introducing oleoyl into β-1,3-glucan.

### [Production of adhesive tape]

### [Example 1]

A toluene solution (solids concentration of 10% by weight) of myristoylated β-1,3-glucan was prepared.

Separately, a toluene solution (solids concentration 50% by weight) of PENSEL D-125 (Arakawa Chemical Industries, rosin ester, ring and ball softening point 120 to 130°C), which is a rosin-based resin, was prepared.

Then, the toluene solution of myristoylated β-1,3-glucan and the toluene solution of PENSEL D-125 were blended so that the PENSEL D-125 amounted to 30 parts by weight relative to 100 parts by weight of the myristoylated β-1,3-glucan, and the mixture was then stirred. In this manner, a toluene solution of an adhesive composition was obtained.

The toluene solution of the adhesive composition was applied to a surface of a polyester base material (Toray Industries, Inc.: Lumirror S-10, thickness 25 µm) as a base material sheet 2 using an applicator (manufactured by Tester Sangyo Co., Ltd.), and dried at 50°C for 5 minutes and then at 120°C for 5 minutes. In this manner, an adhesive tape 1 including the base material sheet 2 and an adhesive layer 3 having a thickness of 50 µm was produced.

### [Examples 2 and 3 and Comparative Examples 1 and 2]

The adhesive composition and the adhesive tape 1 were produced in the same manner as in Example 1. However, the type of the tackifier was changed as follows. The changes are also shown in Table 1.

In Example 2, TAMANOL 901 (Arakawa Chemical Industries, phenolic modified rosin, ring and ball softening point 125 to 135°C) was used in place of PENSEL D-125 (rosin ester).

In Example 3, TAMANOL 803L (Arakawa Chemical Industries, phenolic modified rosin, ring and ball softening point 145 to 160°C) was used in place of PENSEL D-125 (rosin ester).

In Comparative Example 1, ARKON P-125 (Arakawa Chemical Industries, petroleum-based resin, ring and ball softening point 125±5°C) was used in place of PENSEL D-125 (rosin ester).

In Comparative Example 2, YS RESIN TO-125 (Yasuhara Chemical Co., Ltd., terpene-based resin, ring and ball softening point 125±5°C) was used in place of PENSEL D-125 (rosin ester).

### [Examples 4 to 8]

The adhesive composition and the adhesive tape 1 were produced in the same manner as in Example 1. However, the type of carbon atom in the R (aliphatic hydrocarbon group) of the acyl (RCO) introduced into the β-1,3-glucan derivative was changed as follows. The changes are also shown in Table 2.

In Example 4, butanoylated β-1,3-glucan (RCO where R (aliphatic hydrocarbon group) has 3 carbon atoms) was used in place of the myristoylated β-1,3-glucan (RCO where R (aliphatic hydrocarbon group) has 13 carbon atoms).

In Example 5, octanoylated β-1,3-glucan (RCO where R (aliphatic hydrocarbon group) has 7 carbon atoms) was used in place of the myristoylated β-1,3-glucan (RCO where R (aliphatic hydrocarbon group) has 13 carbon atoms).

In Example 6, lauroylated β-1,3-glucan (RCO where R (aliphatic hydrocarbon group) has 11 carbon atoms) was used in place of the myristoylated β-1,3-glucan (RCO where R (aliphatic hydrocarbon group) has 13 carbon atoms).

In Example 7, palmitoylated β-1,3-glucan (RCO where R (aliphatic hydrocarbon group) has 15 carbon atoms) was used in place of the myristoylated β-1,3-glucan (RCO where R (aliphatic hydrocarbon group) has 13 carbon atoms).

In Example 8, oleoylated β-1,3-glucan (RCO where R (aliphatic hydrocarbon group) has 17 carbon atoms) was used in place of the myristoylated β-1,3-glucan (RCO where R (aliphatic hydrocarbon group) has 13 carbon atoms).

### [Examples 9 to 15]

The adhesive composition and the adhesive tape 1 were produced in the same manner as in Example 1. However, the amount of the PENSEL D-125 relative to 100 parts by weight of the myristoylated β-1,3-glucan was changed as follows. The changes are also shown in Table 3.

In Example 9, the amount of the PENSEL D-125 relative to 100 parts by weight of the myristoylated β-1,3-glucan was changed from 30 parts by weight to 5 parts by weight.

In Example 10, the amount of the PENSEL D-125 relative to 100 parts by weight of the myristoylated β-1,3-glucan was changed from 30 parts by weight to 10 parts by weight.

In Example 11, the amount of the PENSEL D-125 relative to 100 parts by weight of the myristoylated β-1,3-glucan was changed from 30 parts by weight to 50 parts by weight.

In Example 12, the amount of the PENSEL D-125 relative to 100 parts by weight of the myristoylated β-1,3-glucan was changed from 30 parts by weight to 70 parts by weight.

In Example 13, the amount of the PENSEL D-125 relative to 100 parts by weight of the myristoylated β-1,3-glucan was changed from 30 parts by weight to 90 parts by weight.

In Example 14, the amount of the PENSEL D-125 relative to 100 parts by weight of the myristoylated β-1,3-glucan was changed from 30 parts by weight to 120 parts by weight.

In Example 15, the amount of the PENSEL D-125 relative to 100 parts by weight of the myristoylated β-1,3-glucan was changed from 30 parts by weight to 150 parts by weight.

### [Evaluation]

The adhesive layers of Examples and Comparative Examples were evaluated with respect to the following items. The results are shown in Tables 1 to 3. The results of Example 1 were given in Tables 1 to 3 for easy comparison to those of the other Examples.

### [Adhesive strength]

The adhesive tape 1 was cut into a size of 20 mm wide and 70 mm long to produce a sample.

The adhesive layer 3 of the sample was pressure-bonded to a stainless steel plate by reciprocating a 2 kg roller in an environment of 23°C and 50% RH. Further, the sample was allowed to stand for 30 minutes in the same environment. Thereafter, the "adhesive strength" was obtained by measuring a peel force (N/20 mm) when the sample was peeled off at a peel rate of 300 mm/min and a peel angle of 180° using a universal tensile testing machine, Autograph AG-IS (Shimadzu Corporation). The adhesive strength was measured in an environment of 23°C and 50% RH.

### [Viscosity measurement method]

The solids concentration of the toluene solution of the adhesive composition, that is, a total proportion of the β-1,3-glucan derivative and the tackifier in the toluene solution, was adjusted to 10% by weight to prepare a sample solution.

The viscosity of the sample solution was measured under conditions of a temperature of 25°C and a shear rate of 1 (1/s) using a rheometer (Model RS-6000, manufactured by HAAKE) equipped with a jig (a cone plate having a cone diameter of 25 to 50 mm and a cone angle of 0.5 to 2°).

### [Table 1]

**TABLE 1**

| | | Example 1 | Example 2 | Example 3 | Comparative Example 1 | Comparative Example 2 |
|---|---|---|---|---|---|---|
| β-1,3-glucan derivative | No. of carbon atoms in R of RCO (acyl group) | 13 | 13 | 13 | 13 | 13 |
| Tackifier | Type | Rosin-based resin | Rosin-based resin | Rosin-based resin | Petroleum-based resin | Terpene-based resin |
| | | Rosin ester | Phenolic modified rosin | Phenolic modified rosin | | |
| | | PENSEL D-125 | TAMANOL 901 | TAMANOL 803L | ARKON P-125 | YS RESIN TO-125 |
| | Softening point (°C) | 120-130 | 125-135 | 145-160 | 125±5 | 125±5 |
| | Amount (parts by weight) relative to 100 parts by weight of β-1,3-glucan derivative | 30 | 30 | 30 | 30 | 30 |
| Evaluation | Adhesive strength to stainless steel plate (N/20 mm) | 3.9 | 3.8 | 4.2 | 3.0 | 2.9 |
| | Viscosity of solution of adhesive composition (Pa·s) | 1.6 | 1.5 | 2.0 | 2.6 | 2.7 |

### [Table 2]

**TABLE 2**

| | | Example 4 | Example 5 | Example 6 | Example 1 | Example 7 | Example 8 |
|---|---|---|---|---|---|---|---|
| β-1,3-glucan derivative | No. of carbon atoms in R of RCO (acyl group) | 3 | 7 | 11 | 13 | 15 | 17 |
| Tackifier | Type | Rosin-based resin | Rosin-based resin | Rosin-based resin | Rosin-based resin | Rosin-based resin | Rosin-based resin |
| | | Rosin ester | Rosin ester | Rosin ester | Rosin ester | Rosin ester | Rosin ester |
| | | PENSEL D-125 | PENSEL D-125 | PENSEL D-125 | PENSEL D-125 | PENSEL D-125 | PENSEL D-125 |
| | Softening point (°C) | 120-130 | 120-130 | 120-130 | 120-130 | 120-130 | 120-130 |
| | Amount (parts by weight) relative to 100 parts by weight of β-1,3-glucan derivative | 30 | 30 | 30 | 30 | 30 | 30 |
| Evaluation | Adhesive strength to stainless steel plate (N/20 mm) | 0.03 | 1.5 | 4.3 | 3.9 | 2.7 | 0.8 |
| | Viscosity of solution of adhesive composition (Pa·s) | 8.6 | 0.7 | 10.6 | 1.6 | 8.2 | 2.2 |

### [Table 3]

**TABLE 3**

| | | Example 9 | Example 10 | Example 1 | Example 11 | Example 12 | Example 13 | Example 14 | Example 15 |
|---|---|---|---|---|---|---|---|---|---|
| β-1,3-glucan derivative | No. of carbon atoms in R of RCO (acyl group) | 13 | 13 | 13 | 13 | 13 | 13 | 13 | 13 |
| Tackifier | Type | Rosin-based resin | Rosin-based resin | Rosin-based resin | Rosin-based resin | Rosin-based resin | Rosin-based resin | Rosin-based resin | Rosin-based resin |
| | | Rosin ester | Rosin ester | Rosin ester | Rosin ester | Rosin ester | Rosin ester | Rosin ester | Rosin ester |
| | | PENSEL D-125 | PENSEL D-125 | PENSEL D-125 | PENSEL D-125 | PENSEL D-125 | PENSEL D-125 | PENSEL D-125 | PENSEL D-125 |
| | Softening point (°C) | 120-130 | 120-130 | 120-130 | 120-130 | 120-130 | 120-130 | 120-130 | 120-130 |
| | Amount (parts by weight) relative to 100 parts by weight of β-1,3-glucan derivative | 5 | 10 | 30 | 50 | 70 | 90 | 120 | 150 |
| Evaluation | Adhesive strength to stainless steel plate (N/20 mm) | 1.9 | 2.9 | 3.9 | 4.1 | 3.4 | 2.3 | 2.9 | 1.5 |
| | Viscosity of solution of adhesive composition (Pa-s) | 9.0 | 4.4 | 1.6 | 0.7 | 0.6 | 0.3 | 0.3 | 0.2 |

While the illustrative embodiments of the present invention are provided in the above description, such is for illustrative purpose only and it is not to be construed restrictively. Modification and variation of the present invention that will be obvious to those skilled in the art is to be covered by the following claims.

### Industrial Applicability

The adhesive composition is used as a material for an adhesive layer of an adhesive tape.

### Description of Reference Numerals

- 1: adhesive tape
- 3: adhesive layer

## Claims

1. An adhesive composition, comprising
a β-1,3-glucan derivative in which an acyl group is incorporated into β-1,3-glucan; and
a rosin-based resin.

2. The adhesive composition according to claim 1, wherein the rosin-based resin has a softening point of 140°C or less.

3. The adhesive composition according to claim 1 or 2, wherein
the acyl group is represented by RCO-,
where R is an aliphatic hydrocarbon group having 5 or more and 16 or less carbon atoms.

4. The adhesive composition according to any one of claims 1 to 3, wherein
an amount of the rosin-based resin relative to 100 parts by weight of the β-1,3-glucan derivative is 10 parts by weight or more and 100 parts by weight or less.

5. An adhesive tape, comprising an adhesive layer made of an adhesive composition according to any one of claims 1 to 4.
